Europäisches Patentamt

European Patent Office

Office européen des brevets

(11) Veröffentlichungsnummer: **0 172 997**
A2

# EUROPÄISCHE PATENTANMELDUNG

(21) Anmeldenummer: 85106360.2

(22) Anmeldetag: 23.05.85

(51) Int. Cl.⁴: **B 62 K 17/00**, B 62 B 15/00

(30) Priorität: 23.05.84 DE 8415784 U

(43) Veröffentlichungstag der Anmeldung: 05.03.86
Patentblatt 86/10

(84) Benannte Vertragsstaaten: AT BE CH DE FR GB IT LI LU
NL

(71) Anmelder: Mössner, Eugen K., Neudorfstrasse 3,
D-7830 Emmendingen (DE)

(72) Erfinder: Mössner, Eugen K., Neudorfstrasse 3,
D-7830 Emmendingen (DE)

(74) Vertreter: Patentanwälte TER MEER - MÜLLER -
STEINMEISTER, Artur-Ladebeck-Strasse 51,
D-4800 Bielefeld 1 (DE)

(54) **Windgetriebenes Landfahrzeug.**

(57) Ein windgetriebenes Landfahrzeug mit einem als
Standfläche dienenden Brett (19) und einem auf diesem
angebrachten Segel (14) ist derart mit Räder oder Kufen
tragenden vorderen und hinteren Fahrgestellen (20, 22)
verbunden, daß es um seine Längsmittelachse drehbar ist.
Die Fahrgestelle (20, 22) weisen jeweils ein mit dem Brett
(10) gekoppeltes Lenkgestänge auf, das eine gleichzeitige
und gegensinnige Lenkung der vorderen und hinteren Räder bzw. Kufen entsprechend einer Kippbewegung des
Brettes (10) um seine Längsachse bewirkt.

## WINDGETRIEBENES LANDFAHRZEUG

Die Erfindung betrifft ein windgetriebenes Landfahrzeug mit einem als Standfläche dienenden Brett und einem auf diesem angebrachten Segel.

Die heutige weite Verbreitung des Windsurfens hat zu Versuchen geführt, das beim Windsurfen übliche, allseitig kipp- und schwenkbare Segel auch für Landfahrzeuge einzusetzen. Die bisher bekannten Ausführungsformen sind jedoch in ihrer Handhabung und insbesondere ihrer Lenkbarkeit unbefriedigend. Hierdurch wird auch die Betriebssicherheit des Fahrzeugs beeinträchtigt.

Der Erfindung liegt daher die Aufgabe zugrunde, ein Landfahrzeug der gattungsgemäßen Art zu schaffen, das eine hohe Betriebssicherheit und Fahrstabilität aufweist und in einfacher Weise und ggf. mit engen Radien lenkbar ist.

Diese Aufgabe wird erfindungsgemäß bei einem Landfahrzeug der eingangs genannten Art gelöst durch ein Lenkgestänge zur gleichzeitigen und gegensinnigen Lenkung vorderer und hinterer Räder, Kufen oder dergleichen, das mit einer Drehbewegung des Brettes um seine Längsmittelachse gekoppelt ist.

Der auf dem Brett stehende Benutzer kann somit durch verhältnismäßig geringe Drehung des Brettes mit den Füßen die vorderen und hinteren Räder lenken und damit verhältnismäßig enge Lenkradien erzielen.

Vorzugsweise sind vordere und hintere, ggf. indentische Fahrgestelle vorgesehen, die jeweils einen starren, im wesentlichen kastenförmigen, mittleren Rahmen umfassen, an dem jeweils auf beiden Seiten obere und untere Querlenker insbesondere Dreieckslenker zur Aufnahme der Räder schwenkbar gelagert sind.

Am vorderen und hinteren Ende des Brettes können in dessen Längsmittelachse Rohrabschnitte befestigt sein, die in den mittleren Rahmen der Fahrgestelle drehbar gelagert sind. Das Lenkgestänge ist vorzugsweise jeweils mit dem nach vorne bzw. hinten aus den Rahmen austretenden Enden der Rohrabschnitte verbunden.

Weitere Einzelheiten der Erfindung ergeben sich aus den Unteransprüchen.

Im folgenden werden bevorzugte Ausführungsbeispiele der Erfindung anhand der beigefügten Zeichnung näher erläutert.

Fig. 1    ist eine perspektivische Gesamtdarstellung eines erfindungsgemäßen Landfahrzeugs;

Fig. 2    ist eine Darstellung eines Fahrgestells;

Fig. 3    ist eine Teilansicht des mittleren Rahmens eines Fahrgestells;

Fig. 4    ist eine entsprechende Darstellung von einem anderen Blickpunkt aus;

Fig. 5    zeigt Einzelheiten der Rad- oder Kufenaufhängung an einem Fahrgestell;

Fig. 6    ist eine Seitenansicht eines Mastfußgelenks;

Fig. 7    zeigt eine abgewandelte Ausführungsform des Mastfußgelenks mit einem Bremshebel.

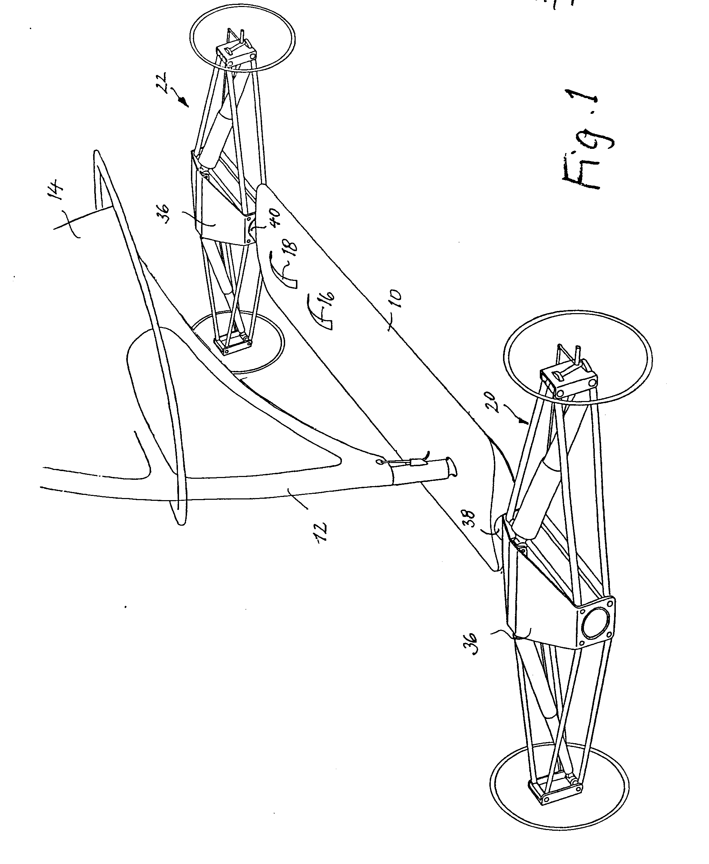

Figur 1 zeigt ein erfindungsgemäßes Landfahrzeug mit einem nach Art eines Surfbrettes gestalteten Brett 10, einem Mast 12 und einem Segel 14. Auf Einzelheiten der Besegelung

- 3 -

kommt es hier nicht an. Auf dem Brett 10 sind im übrigen zwei Schlaufen 16,18 angebracht, in die der Benutzer die Füße einschieben kann.

Am vorderen und hinteren Ende des Brettes 10 sind Fahrgestelle 20,22 angebracht, die aus Gründen der vereinfachten Herstellung identisch ausgeführt sein können, so daß im folgenden im wesentlichen lediglich ein Fahrgestell näher erläutert werden soll.

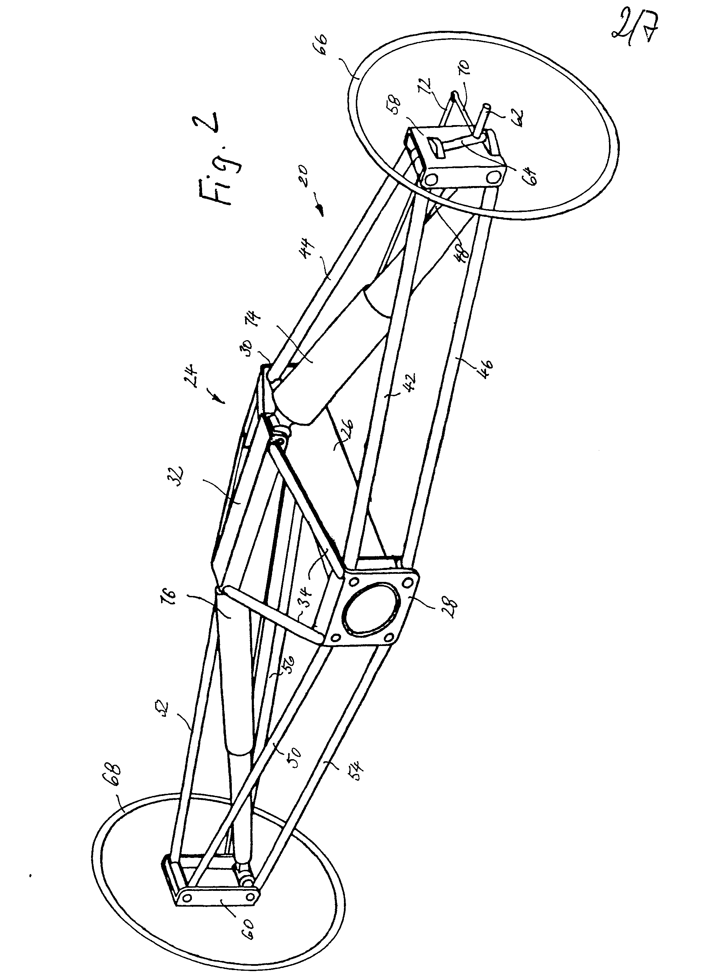

Gemäß Figur 2 umfassen die Fahrgestelle 20,22 im mittleren Bereich einen starren Rahmen 24, der aus einem Rohrabschnitt 26, vorderen und hinteren Platten 28,30, die an den Enden des Rohrabschnitts 26 befestigt sind, und einer oberen Querstrebe 32 bestehen, die mit den Platten 28,30 über schräge Streben 34 gemäß Figur 2 oder Platten 36 gemäß Figur 1 verbunden sein kann.

Der Rohrabschnitt 26 dient als Aufnahme und Lager für Rohrabschnitte 38,40, die an den vorderen und hinteren Enden des Brettes 10 in dessen Längsmittelachse befestigt sind. Bei einem Brett 10 aus Kunststoff kann auch ein durchgehendes Rohr eingeformt sein.

An den Platten 28,30, die in ihrer Form quadratisch und als in Abstand liegende Doppelplatten ausgebildet sind, sind jeweils an den Ecken obere und untere Querlenker 42,44,46,48,50,52,54,56 gelenkig befestigt, die jeweils paarweise Dreieckslenker bilden. Die äußeren Enden der Dreieckslenker sind in der bei Kraftfahrzeugen üblichen Weise im oberen und unteren Bereich von Radträgern 58,60 schwenkbar gelagert, von denen Achsschenkel 62 ausgehen, die an drehbaren, im wesentlichen senkrechten Achsschenkelträgern 64 befestigt sind. Die Achsschenkel 62 nehmen Räder 66,68 auf. Ein Lenkhebel 70 und eine Lenkstange 72 bilden Teile eines im Prinzip üblichen Lenkgestänges.

Die äußeren Enden der Querstreben 32 der Fahrgestelle 20,22 dienen als innerer Anlenkpunkt für Stoßdämpfer 74, 76, deren äußeres Ende sich schwenkbar am unteren Bereich der Radträger 58 abstützt.

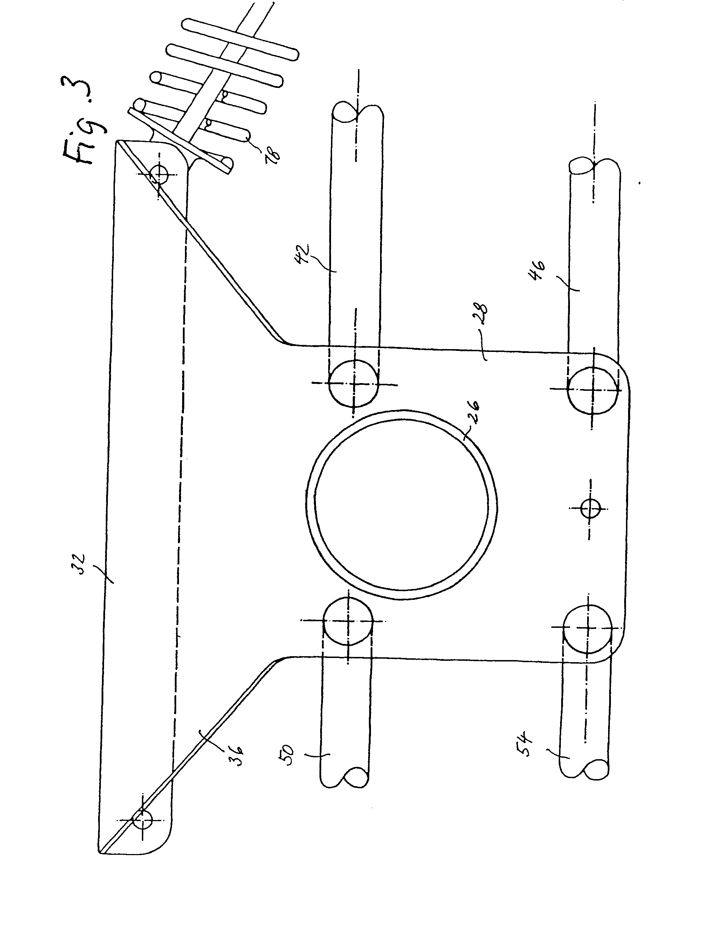

Figur 3 zeigt in vergrößerter Teildarstellung einen Teilbereich eines der Fahrwerke. An der Platte 28 (Fig. 2), die an einem Ende des Rohrabschnitts 26 eines Fahrgestells befestigt ist, sind Querstreben 42,46,50,54 schwenkbar gelagert. Die Platte ist über eine schräg aufsteigende, ggf. einstückig angeschlossene weitere Platte 36 mit der oberen Querstrebe 32 des Fahrgestells verbunden. An den Enden der oberen Querstrebe 32 sind gemäß Figur 3 Federn 78 abgestützt, deren äußere Enden in nicht gezeigter Weise entsprechend den Stoßdämpfern 74 gemäß Figur 2 an den Radträgern gelagert sind.

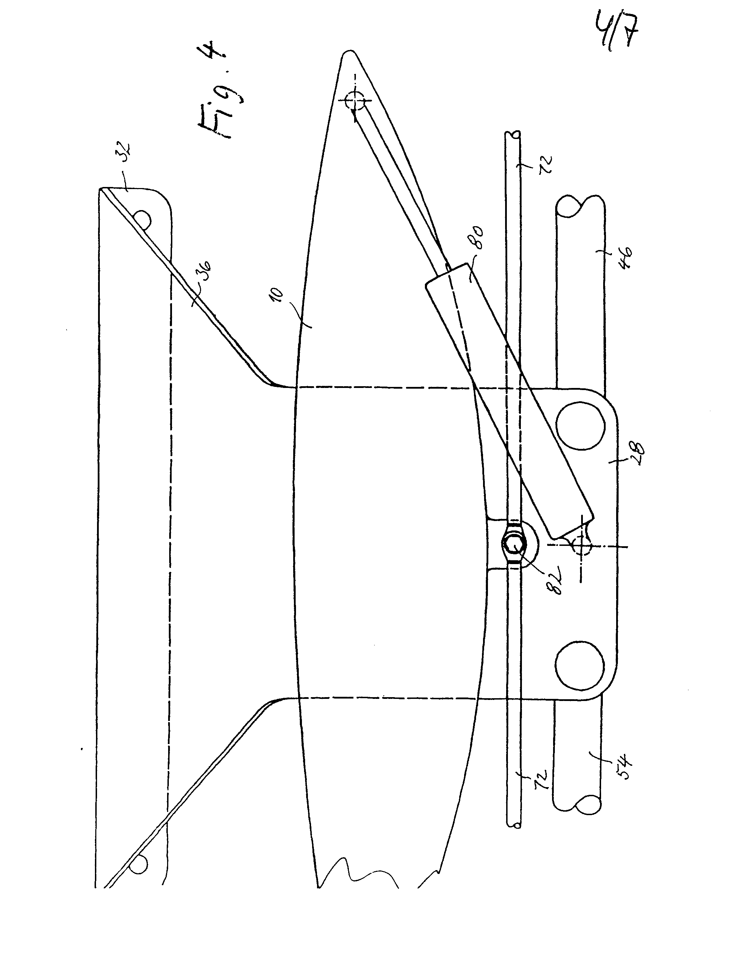

Figur 4 zeigt eine ähnliche Ansicht, jedoch in Verbindung mit einem angedeuteten Querschnitt des Brettes 10. Gemäß Figur 4 ist im seitlichen Bereich des Brettes 10 ein Stoßdämpfer 80 gelagert, dessen anderes Ende im unteren Bereich der Platte 28 schwenkbar befestigt ist. Der Stoßdämpfer 80 dämpft Bewegungen des Brettes 10 um seine Längsmittelachse.

Von der Unterseite des Brettes 10 bzw. des hier nicht gezeigten Rohrabschnitts 38,40 geht ein Ansatz 82 aus, an dem die bereits in Zusammenhang mit Figur 2 erwähnten Lenkstangen schwenkbar befestigt sind. Seitliche Kippbewegungen des Brettes 10 um dessen Längsmittelachse werden daher auf das Lenkgestänge übertragen und führen zur Lenkung der Räder. Das Lenkgestänge ist im einzelnen derart ausgeführt, daß alle Räder gleichsinnig, also im Sinne einer Rechtskurve oder einer Linkskurve eingeschlagen werden.

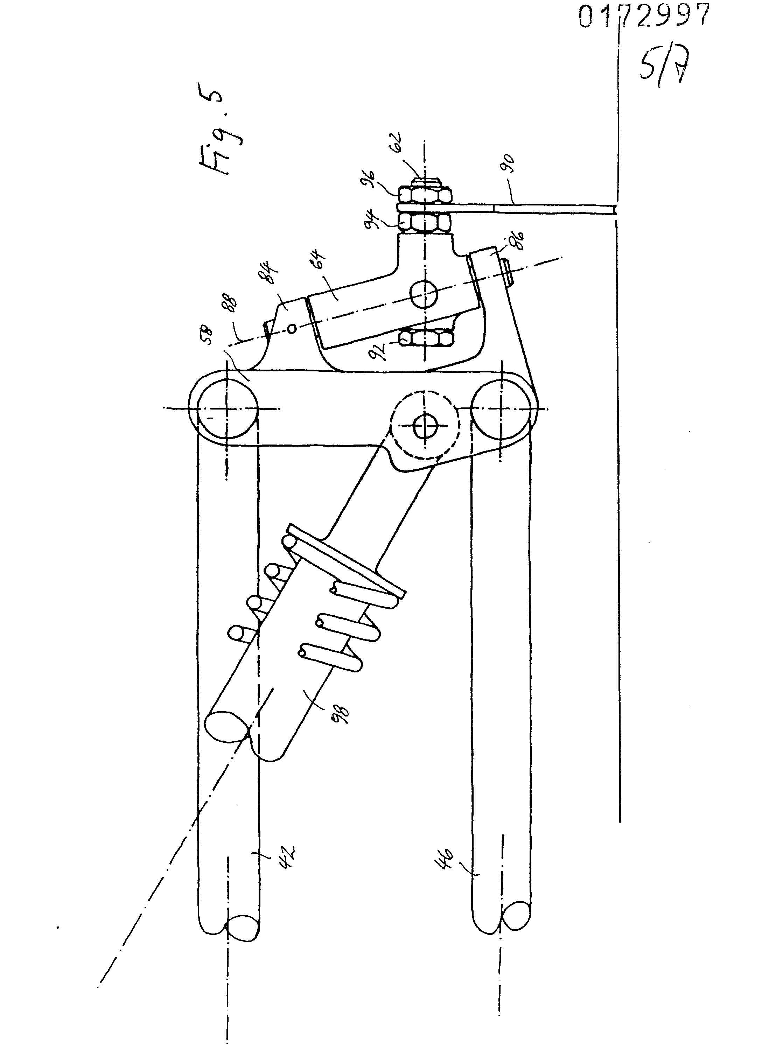

Figur 5 zeigt Einzelheiten eines Radträgers 58 am äußeren Ende der Dreiecks- bzw. Querlenker 62,64. An der Außenseite des Radträgers 58 ist der Achsschenkelträger 64 in oberen und unteren Lagern 84,86 drehbar gelagert. Die Drehachse 88 ist schräg nach unten und außen gerichtet, so daß sich bei Verwendung der Räder 66,68 allenfalls ein äußerst geringer Lenkrollradius ergibt und Stöße, die auf die Räder von der Fahrbahn übertragen werden, nicht auf das Brett 10 gelangen.

Im Falle der Figur 5 ist auf der Achse 62 anstelle der in Figur 2 gezeigten Räder eine Kufe 90 mit Hilfe von Muttern 92,94,96 befestigt, so daß das erfindungsgemäße Landfahrzeug als Eissegler eingesetzt werden kann.

Anstelle des in Figur 2 gezeigten Stoßdämpfers 74,76 und der in Figur 3 angedeuteten Feder 78 ist in Figur 5 ein kombiniertes Federbein 98 mit Feder und Stoßdämpfer gezeigt.

Ergänzend ist es möglich, die Fahreigenschaften und die Lenkbarkeit des oben beschriebenen Landfahrzeugs durch die folgenden Maßnahmen zu verbessern.

Wenn bei den Fahrgestellen 20,22 jeweils die Schwenkradien der oberen und unteren Querlenker unterschiedlich gewählt werden, so werden die Radträger 60 beim Ein- und Ausfedern der Fahrgestelle geringfügig um ihre parallel zur Fahrzeug-Längsrichtung verlaufenden Mittelachsen geschwenkt. Durch eine Verkürzung der Schwenkradien der unteren Querlenker 46,48,54,56 kann daher erreicht werden, daß sich die Aufstandspunkte der Räder 66,68 beim Ein- und Ausfedern längs einer senkrechten Geraden in Bezug auf den Rahmen 24 bewegen. Dies hat den Vorteil, daß beim Ein- und Ausfedern keine Veränderung der Spurbreite eintritt.

Das Brett 10, das gemäß Figur 4 über die Stoßdämpfer 80 mit den Fahrgestellen verbunden ist, ist mit Vorteil zusätzlich durch elastische Elemente, beispielsweise durch Torsionsstäbe oder Ringfederelemente mit beiden Fahrgestellen verbunden, so daß das Brett 10 hinsichtlich der Drehung um die Längsmittelachse elastisch in der Gleichgewichtsstellung gehalten wird, in der die Lenkgestänge auf Geradeausfahrt eingestellt sind. Wenn der Fahrer nach einer Kurvenfahrt den Körperschwerpunkt in eine Position über der Längsmittelachse des Brettes 10 bringt, kehrt das Brett daher selbstätig in die Gleichgewichtsstellung zurück. Hierdurch wird die Standsicherheit des Fahrers und die Stabilität der Lenkung erhöht.

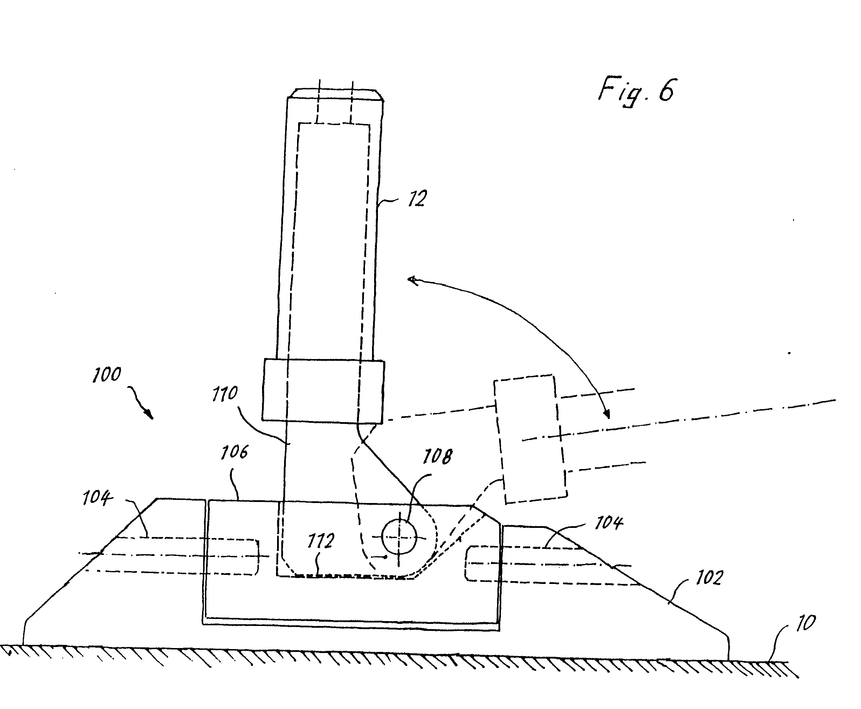

Figur 6 zeigt ein Mastfußgelenk 100, das zur schwenkbaren Befestigung des Mastes 12 auf dem Brett 10 dient und durch seine spezielle Ausgestaltung ebenfalls zur Erhöhung der Fahrsicherheit beiträgt. Das Mastfußgelenk 100 umfaßt einen auf dem Brett 10 befestigten Sockel 102 mit in Fahrzeug-Längsrichtung verlaufenden Gelenkbolzen 104, einen um 180° schwenkbar auf den Gelenkbolzen 104 gelagerten Gelenkkörper 106 mit in Querrichtung des Fahrzeugs verlaufenden Gelenkbolzen 108 und einen um die Gelenkbolzen 108 schwenkbaren Masthalter 110 zur drehbaren Lagerung des Mastes 12. Der Masthalter 110 weist eine Stützfläche 112 auf, die an dem Gelenkkörper 106 anliegt, wenn sich der Mast 12 rechtwinklig zu den Gelenkbolzen 104 erstreckt. Die Stützfläche 112 liegt in Fahrtrichtung gesehen vor den Gelenkbolzen 108, so daß der Masthalter in Fahrzeug-Längsrichtung nur nach rückwärts kippbar ist, wie durch gestrichelte Linien in Figur 4 angedeutet wird. Eine Kippbewegung des Mastes nach vorn wird somit verhindert oder zumindest auf einen kleinen Winkel begrenzt. Dies hat den Vorteil, daß der Segeldruck über das nach vorn steife Mastfußgelenk in Vortrieb umgesetzt wird, ohne daß der Fahrer den Segeldruck mit seiner Körperkraft halten muß. Dies erleichtert es dem Fahrer, die Neigung des Mastes in Querrichtung des Fahrzeugs zu steuern und das Fahrzeug zu lenken, indem er das Brett 10 durch Gewichtsverlagerung um seine Längsachse kippt. Ein weiterer Vorteil des nach vorn steifen Mastfußgelenks 100 besteht darin, daß bei einem Sturz des Fahrers ein Kippen des Mastes nach vorn verhindert wird, so daß Gefährdungen durch die in Fahrtrichtung vorspringede Mastspitze vermieden werden.

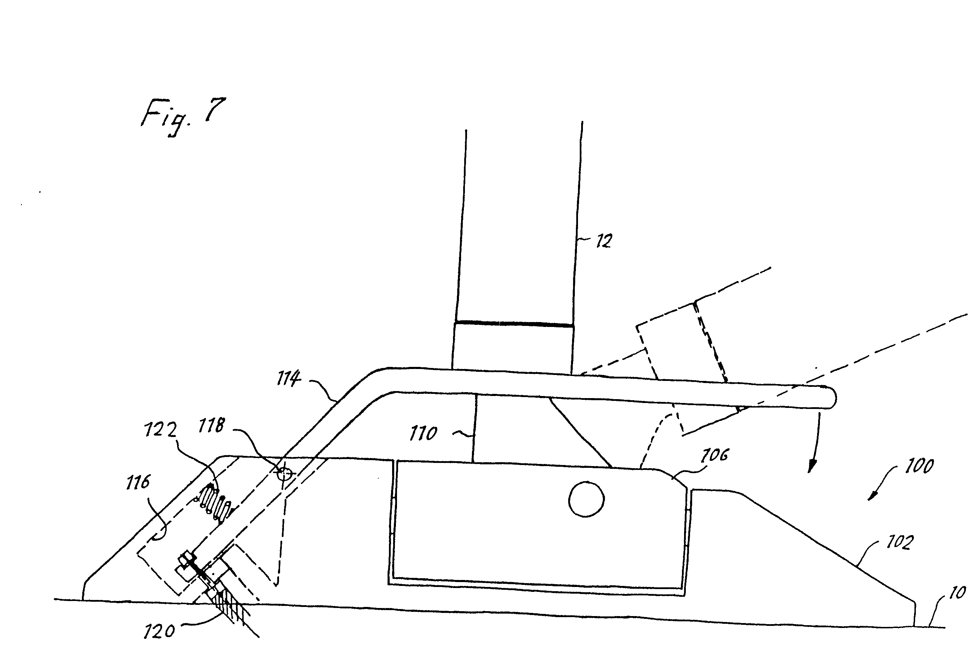

Gemäß Figur 7 ist an dem Mastfußgelenk 100 zusätzlich ein Bremshebel 114 angeordnet, der den Masthalter 110 gabelförmig von vorn umgreift und sich am unteren Ende des Mastes 12 abstützt. Der Bremshebel 114 ist in einer Ausnehmung 116 des Sockels 102 schwenkbar an einem Gelenkbolzen 118 befestigt. An dem von dem Mastfuß 110 abgewandten freien Ende des Bremshebels 114 sind Bowdenzüge 120 verankert, die zu in die Räder des Landfahrzeugs integrierten Bremsen führen. Wenn bei einem Sturz des Fahrers der Mast zur Seite oder nach rückwärts kippt, so wird durch das untere Ende des Mastes der Bremshebel 114 betätigt, so daß über die Bowdenzüge 120 die Bremsen angezogen und das Fahrzeug zum Stehen gebracht wird. Durch eine Rückholfeder 122 wird der Bremshebel gegen das untere Ende des Mastes vorgespannt, so daß die Bremsen während der Fahrt mit aufgerichtetem Mast gelöst sind.

0172997

PATENTANSPRÜCHE

1. Windgetriebenes Landfahrzeug mit einem als Standfläche dienenden Brett und einem auf diesem angebrachten Segel, g e k e n n z e i c h n e t durch ein Lenkgestänge (70,72, 82) zur gleichzeitigen und gegensinnigen Lenkung vorderer und hinterer Räder (66,68), Kufen (90) oder dergleichen, das mit einer Drehbewegung des Brettes (10) um seine Längsmittelachse gekoppelt ist.

2. Landfahrzeug nach Anspruch 1, g e k e n n z e i c h -
n e t durch vordere und hintere Fahrgestelle (20,22) in
Verbindung mit dem Brett (10) mit oberen und unteren Querlenkern (42 bis 56) zur Aufnahme von Rädern (66,68) und
Lagern (26,28) zur schwenkbaren Lagerung des Brettes (10).

3. Landfahrzeug nach Anspruch 2, dadurch g e k e n n -
z e i c h n e t, daß vom vorderen und hinteren Ende des
Brettes (10) in dessen Längsmittelachse ein Rohrabschnitt
(38,40) ausgeht, der in Rohrabschnitten (26) der Fahrgestelle (20,22) drehbar gelagert ist.

4. Landfahrzeug nach Anspruch 3, dadurch g e k e n n -
z e i c h n e t, daß die Fahrgestelle (20,22) einen mittleren, starren Rahmen (24) umfassen, der den Rohrabschnitt
(26) einschließt und an dem die Querlenker (42 bis 56)
schwenkbar gelagert sind.

5. Landfahrzeug nach einem der Ansprüche 2 bis 4, dadurch
g e k e n n z e i c h n e t, daß an den äußeren Enden der
Querlenker Radträger (58,60) schwenkbar befestigt sind,
die einen Achsschenkel mit drehbarem Achsschenkelträger
aufnehmen, der mit dem Lenkgestänge (70,72) in Verbindung steht.

6. Landfahrzeug nach einem der Ansprüche 2 bis 5, dadurch
g e k e n n z e i c h n e t, daß die Räder (66,68) durch
Federn (78) und/oder Stoßdämpfer (74,76) abgestützt sind.

7. Landfahrzeug nach einem der Ansprüche 2 bis 6, dadurch
g e k e n n z e i c h n e t, daß die Schwenkradien der
unteren Querlenker (46,48,54,56) gegenüber denen der
oberen Querlenker (42,44,50,52) derart verringert sind,
daß sich die Aufstandspunkts der Räder (66,68) beim Ein-
und Ausfedern auf einer senkrechten Geraden in Bezug auf das Fahrgestell (22,24) bewegen.

8. Landfahrzeug nach einem der vorhergehenden Ansprüche, dadurch g e k e n n z e i c h n e t , daß das Brett (10) mit den beiden Fahrgestellen (22,24) durch elastische Elemente verbunden ist, die einer Drehung des Brettes um seine Längsmittelachse aus der der Geradeausfahrt entsprechenden Gleichgewichtsstellung entgegenwirken.

9. Landfahrzeug nach einem der vorhergehenden Ansprüche, dadurch g e k e n n z e i c h n e t , daß der das Segel (14) tragende Mast (12) in einem Mastfußgelenk (100) gelagert ist, das ein Kippen des Mastes (12) aus der Senkrechten zu beiden Seiten und nach rückwärts gestattet, ein Kippen des Mastes nach vorn jedoch verhindert.

10. Landfahrzeug nach Anspruch 9, dadurch g e k e n n - z e i c h n e t , daß an dem Mastfußgelenk (100) ein durch die Kippbewegung des Mastes (12) betätigbarer Bremshebel (114) angeordnet ist, der mechanisch mit Bremsen für wenigstens eines der Räder (66,68) gekoppelt ist.

0172997

1/7

Fig.1

0172997

2/7

Fig. 2

Fig.3

Fig. 4

0172997

5/7

Fig. 5

Fig. 6

0172997

Fig. 7